# EUROPÄISCHE PATENTSCHRIFT

(11) **EP 0 417 426 B1**
(45) Veröffentlichungstag und Bekanntmachung des Hinweises auf die Patenterteilung: **05.01.1994**
(21) Anmeldenummer: 90113558.2
(22) Anmeldetag: 16.07.1990
(51) Int. Cl.: B62D 25/16

(54) **Konsole für Kotflügelhalter**
Bracket for a support of a mudguard
Console pour un support d'un garde-boue

(30) Priorität: 09.09.1989 DE 8910775 U
(43) Veröffentlichungstag der Anmeldung: 20.03.1991
(73) Patentinhaber: KÖVER GMBH & CO. KG Metall- und Kunststoffverarbeitung, D-21603 Buxtehude (DE)
(72) Erfinder: Jürges, Heinz-Henning, D-2150 Buxtehude (DE)
(74) Vertreter: Grättinger, Günter

(56) Entgegenhaltungen:
- AT-B- 367 694
- DE-A- 1 938 588
- DE-A- 2 121 061
- DE-A- 2 818 623

## Beschreibung

Die vorliegende Erfindung bezieht sich auf eine Konsole für Kotflügelhalter, d.h. auf ein Befestigungsteil zur Befestigung eines Halterohres eines Kotflügelhalters an einem Fahrzeugfahrgestell.

Derzeit erfolgt die Befestigung der Halterohre von Kotflügelhaltern an den Fahrgestellen der entsprechenden Fahrzeuge durch Schweißen. Dabei wird üblicherweise das Halterohr mit einer der Stirnseiten direkt am Fahrzeugfahrgestell angeschweißt; gegebenenfalls dient ein separates am Fahrzeugfahrgestell angeschweißtes Befestigungsteil der mittelbaren Befestigung des Halterohres. In Abhängigkeit von den jeweiligen Bedingungen (Reifengröße, Art der Federung, etc.) wird bei den bekannten Befestigungen die Position des Halterohres bzgl. des Fahrzeugfahrgestells bestimmt und das Halterohr bzw. das Befestigungsteil in dieser Position an dem entsprechenden Längsträger oder Hilfsrahmen angeschweißt.

Diese Art der Befestigung von Halterohren von Kotflügelhaltern an Fahrzeugfahrgestellen weist beträchtliche Nachteile auf. So behindert in dem Falle, daß das Halterohr frühzeitig im Montageprozeß am Fahrzeugrahmen angeschweißt wird, dieses die folgenden Montageschritte; anderenfalls, d.h., wenn die Befestigung des Halterohres am Fahrzeugfahrgestell erst spät im Montageprozeß erfolgt, wird durch die Schweißung der vorher auf die Teile aufgebrachte Korrosionsschutz beschädigt.

Der vorliegenden Erfindung liegt demgemäß die Aufgabe zugrunde, ein Befestigungsteil zu schaffen, welches die Montage eines Halterohres eines Kotflügelhalters an einem Fahrzeugfahrgestell gestattet, ohne daß ein vorher aufgebrachter Korrosionsschutz durch die Montage beschädigt wird. Das Befestigungsteil soll ferner in der Weise ausgestaltet sein, daß es eine einfache Montage des Kotflügelhalters gestattet, wobei gleichzeitig die Möglichkeit der nachträglichen Justierung des Kotflügelhalters und des Kotflügels bzgl. des Fahrzeugfahrgestells bestehen soll.

Erfindungsgemäß wird diese Aufgabe durch eine Konsole gemäß Anspruch 1 gelöst. Die Befestigungsplatte der erfindungsgemäßen Konsole liegt im montierten Zustand auf dem entsprechenden Teil des Fahrzeugfahrgestells, z.B. der Fläche eines Längsträgers oder eines Hilfsrahmens auf. Indem die Befestigungsplatte eine Aufnahme für ein gesondertes Befestigungselement, welches der lösbaren Befestigung der Konsole am Fahrzeugfahrgestell dient, besitzt, kann die Montage des Kotflügelhalters ohne Schweißung erfolgen; es kommt somit zu keiner Beschädigung des vorher auf die Teile aufgebrachten Korrosionsschutzes. Die Montage des Kotflügelhalters kann dadurch zu einem Zeitpunkt stattfinden, von dem ab der bereits montierte Kotflügelhalter beim weiteren Montageprozeß nicht mehr hinderlich ist. Indem die Achse der Aufnahme für das Halterohr des Kotflügelhalters gegenüber der Aufnahme für das Befestigungselement versetzt angeordnet ist, kann durch Verdrehen der Konsole bzgl. des Befestigungselementes die Position des Halterohres variiert und somit der Kotflügel bzgl. des Fahrzeugfahrgestells justiert werden. Schließlich gestattet die erfindungsgemäße Konsole auch eine rasche Demontage des Kotflügels, beispielsweise zum Auflegen von Schneeketten.

Bevorzugt ist vorgesehen, daß die Achse der Aufnahme für das Halterohr des Kotflügelhalters bzgl. der Befestigungsplatte im wesentlichen senkrecht angeordnet ist. Eine derart gestaltete Konsole gestattet die Montage eines horizontal ausgerichteten Halterohres an senkrechten Abschnitten von Teilen des Fahrzeugfahrgestells, z.B. an dem mittleren Abschnitt von als I-Träger ausgebildeten Längsträgern. Diese Abschnitte sind von außen/seitwärts besonders leicht zugänglich, wodurch die Kotflügel-Montage weiter vereinfacht wird; zusätzlich kann durch eine derartige Gestaltung die Montage der Kotflügelhalterung in Bereichen erfolgen, welche mechanisch relativ gering belastet sind. Besonders bevorzugt springt dabei das Tragelement im wesentlichen senkrecht von der Befestigungsplatte vor und ist die Aufnahme für das Halterohr in der Weise angeordnet, daß ihre Projektion in die Ebene der Befestigungsplatte außerhalb des von der Befestigungsplatte abgedeckten Bereiches liegt. Eine sich auf diese Weise ergebende Kröpfung der Konsole gestattet eine Justierung der Kotflügelhalterung innerhalb weiter Grenzen, wobei gleichzeitig eine Behinderung der Verschwenkbarkeit der Konsole bzgl. ihres Befestigungspunktes mit dem Fahrzeugfahrgestell durch vorspringende Teile, wie beispielsweise den Ober- und/oder Unterzug eines I-Trägers nicht erfolgt.

Sofern die erfindungsgemäße Konsole der Befestigung eines Kotflügelhalters an solchen Teilen des Fahrzeugfahrgestells dienen soll, die keine vorstehenden Ränder besitzen (z.B. Kastenträger), ist eine Kröpfung nicht erforderlich. In diesem Falle kann das Tragelement radial von der Befestigungsplatte vorspringen.

Das Tragelement ist bevorzugt als profilierter Tragarm ausgebildet. Weitere vorteilhafte Gestaltungen des Tragelementes sind beispielsweise zwei parallele Tragplatten oder ein nach unten geöffneter U-Träger.

Die Befestigungsplatte weist an ihrem Außenrand bevorzugt eine im wesentlichen ringförmige Auflagefläche auf. Auf diese Weise wird die Beanspruchung des Befestigungselementes verringert, die Krafteinleitung in die Konsole vergleichmäßigt und die Sicherheit der Kotflügelbefestigung erhöht.

Die Aufnahme für das Halterohr umfaßt bevorzugt eine an den Querschnitt des Halterohres angepaßte, dieses vollständig umgreifende Buchse oder Büchse. Bei einer anderen bevorzugten Ausführungsform umfaßt die Aufnahme für das Halterohr eine dieses teilweise umgreifende Schale. Dabei erfolgt die Befestigung des Halterohres in der Aufnahme bevorzugt durch Schweißen. Es kann jedoch auch eine lösbare Befestigung des Halterohres vorgesehen sein, indem die Aufnahme für das Halterohr mit einer mechanischen Klemmeinrichtung, wie beispielsweise einer Klemmschraube versehen ist.

Für die Gestaltung der Aufnahme für das Befestigungselement, welches der lösbaren Befestigung der Konsole am Fahrzeugfahrgestell dient, kommen zahlreiche Möglichkeiten in Betracht. Besonders bevorzugt besteht die Aufnahme aus einer Durchgangsbohrung zur Aufnahme eines als Befestigungselement dienenden Schraubbolzens. Bei einer weiteren bevorzugten Ausführungsform besteht die Aufnahme für das Befestigungselement aus einem einseitig offenen Schlitz von im wesentlichen konstanter Breite. Eine derartige Gestaltung der Aufnahme für das Befestigungselement kann zur Vereinfachung der Montage der Kotflügelhalterung dadurch beitragen, daß die Konsole in ein vormontiertes Befestigungselement eingehängt wird. Schließlich kann die Aufnahme für das Befestigungselement auch aus einer mit einem Gewindeeinsatz versehenen Bohrung bestehen.

Weitere bevorzugte Ausführungsformen gehen aus den Unteransprüchen hervor. Im folgenden werden zwei Ausführungsbeispiele der erfindungsgemäßen Konsole anhand der Zeichnung näher erläutert. Dabei ist darauf hinzuweisen, daß bei Vorliegen entsprechender Einbaubedingungen die dargestellten erfindungsgemäßen Konsolen nicht in der in der Zeichnung wiedergegebenen Ausrichtung montiert werden. Vielmehr wird häufig die Konsole mit im wesentlichen nach unten gerichteter Kröpfung am Fahrzeugfahrgestell montiert werden, so daß die Aufnahme für das Halterohr tiefer liegt als der Befestigungspunkt der Konsole am Fahrgestell. Es zeigt
- Fig. 1: eine Draufsicht auf eine erste Ausführungsform,
- Fig. 2: eine Seitenansicht der Konsole gemäß Fig. 1,
- Fig. 3: einen Schnitt durch die Konsole gemäß den Fig. 1 und 2,
- Fig. 4: einen Schnitt gemäß Linie IV-IV in Fig. 3,
- Fig. 5: eine Draufsicht auf eine zweite Ausführungsform der erfindungsgemäßen Konsole und
- Fig. 6: eine Seitenansicht der Konsole gemäß Fig. 5.

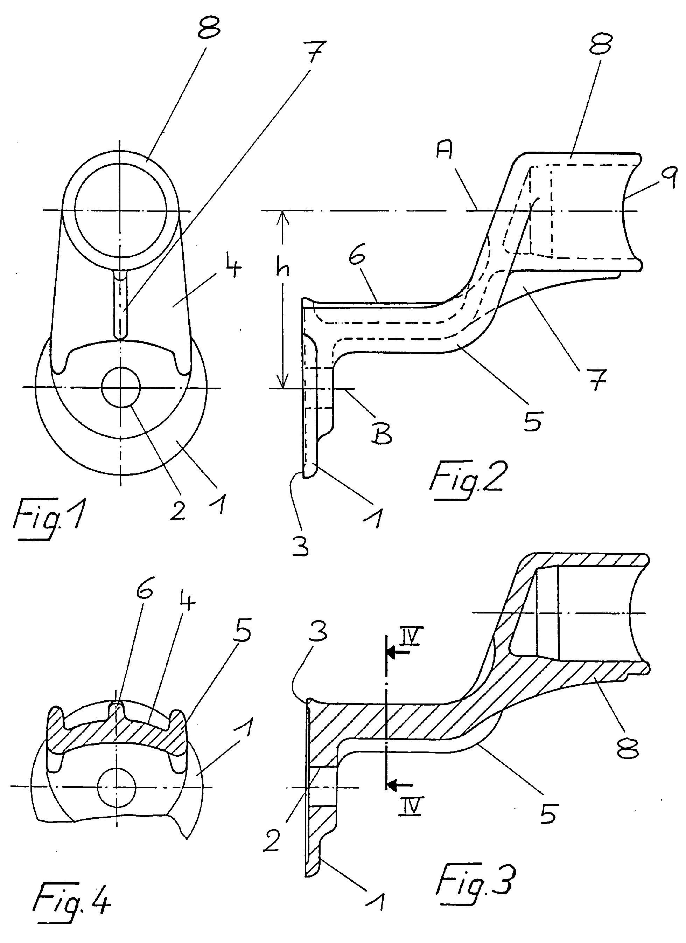

Die Konsole gemäß den Fig. 1 bis 4 besitzt eine Befestigungsplatte 1 mit einer zentral angeordneten Durchgangsbohrung 2. Die Befestigungsplatte besitzt auf der Seite, welche der Verbindung mit dem Fahrzeugfahrgestell dient, an ihrem Umfang eine ringförmige Auflagefläche 3.

Von der Befestigungsplatte 1 springt exzentrisch und senkrecht zu dieser ein Tragarm 4 vor. Der Tragarm 4 ist dabei in der Weise profiliert, daß er zwei seitlich angeordnete Verstärkungsrippen 5 sowie eine obere mittlere Verstärkungsrippe 6 und eine untere mittlere Verstärkungsrippe 7 besitzt. Das von der Befestigungsplatte 1 abgewandte Ende des Tragarms 4 geht in eine Büchse 8 über, deren Innendurchmesser auf den Außendurchmesser des zu befestigenden Halterohres abgestimmt ist. Der Rand 9 der Büchse 8 ist dabei in der Weise geschwungen, daß die Schweißnaht, mit welcher das Halterohr an der Konsole befestigt wird, die Kraftübertragung zwischen Halterohr und Konsole begünstigt, ohne die Festigkeit des Halterohres zu schwächen.

Die Achse A der Büchse 8 ist gegenüber der Achse B der Durchgangsbohrung 2 um die Distanz h versetzt angeordnet, wodurch sich bei Verschwenken der Konsole um die Achse B der Durchgangsbohrung 2 eine Gesamt-Veränderbarkeit der Höhe des Halterohres bzgl. des Fahrzeugfahrgestells um 2 x h ergibt.

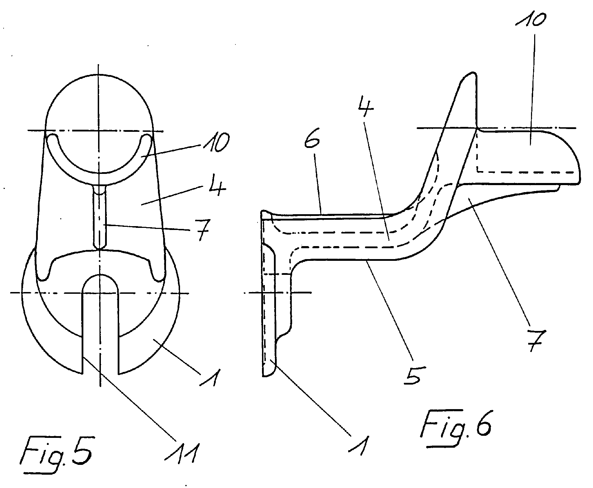

Die Ausführungsform gemäß den Fig. 5 und 6 stimmt im wesentlichen mit der Ausführungsform gemäß den Fig. 1 bis 4 überein, so daß auf die entsprechenden Erläuterungen verwiesen werden kann. Jedoch ist bei der Ausführungsform gemäß den Fig. 5 und 6 die Aufnahme für das Halterohr als eine dieses nur teilweise umgebende Schale 10 ausgebildet. Ferner ist in der Befestigungsplatte 1 als Aufnahme für das Befestigungselement ein Schlitz 11 vorgesehen, wodurch die Konsole über einen als Befestigungselement dienenden am Fahrzeugfahrgestell vormontierten Schraubbolzen geschoben werden kann.

## Patentansprüche

1. Konsole für Kotflügelhalter mit folgenden Merkmalen:
a) Die Konsole umfaßt eine Befestigungsplatte (1);
b) von der Befestigungsplatte (1) springt ein Tragelement (4) vor;
c) an dem Tragelement (4) ist eine Aufnahme (8; 10) für ein Halterohr des Kotflügelhalters vorgesehen;
d) die Befestigungsplatte (1) besitzt eine Aufnahme (2; 11) für ein Befestigungselement, welches der lösbaren Befestigung der Konsole am Fahrzeugfahrgestell dient;
e) die Achse (A) der Aufnahme (8; 10) für das Halterohr des Kotflügelhalters ist gegenüber der Aufnahme (2; 11) für das Befestigungselement versetzt angeordnet.

2. Konsole nach Anspruch 1,
dadurch gekennzeichnet,
daß die Achse (A) der Aufnahme (8; 10) für das Halterohr des Kotflügelhalters bzgl. der Befestigungsplatte (1) im wesentlichen senkrecht angeordnet ist.

3. Konsole nach Anspruch 1 oder Anspruch 2,
dadurch gekennzeichnet,
daß das Tragelement im wesentlichen senkrecht von der Befestigungsplatte (1) vorspringt.

4. Konsole nach einem der Ansprüche 1 bis 3,
dadurch gekennzeichnet,
daß die Aufnahme (8; 10) für das Halterohr in der Weise angeordnet ist, daß ihre Projektion in die Ebene der Befestigungsplatte (1) außerhalb des von der Befestigungsplatte abgedeckten Bereiches liegt.

5. Konsole nach einem der Ansprüche 1 bis 4,
dadurch gekennzeichnet,
daß das Tragelement als profilierter Tragarm ausgebildet ist.

6. Konsole nach einem der Ansprüche 1 bis 5,
dadurch gekennzeichnet,
daß die Aufnahme für das Halterohr eine Büchse (8) umfaßt.

7. Konsole nach einem der Ansprüche 1 bis 5,
dadurch gekennzeichnet,
daß die Aufnahme für das Halterohr eine dieses teilweise umgreifende Schale (10) umfaßt.

8. Konsole nach einem der Ansprüche 1 bis 7,
dadurch gekennzeichnet,
daß die Aufnahme für das Halterohr mit einer mechanischen Klemmeinrichtung versehen ist.

9. Konsole nach einem der Ansprüche 1 bis 8,
dadurch gekennzeichnet,
daß die Befestigungsplatte (1) an ihrem Umfang eine im wesentlichen ringförmige Auflagefläche (3) besitzt.

10. Konsole nach einem der Ansprüche 1 bis 9,
dadurch gekennzeichnet,
daß die Aufnahme für das Befestigungselement aus einer Durchgangsbohrung (2) besteht.

11. Konsole nach einem der Ansprüche 1 bis 9,
dadurch gekennzeichnet,
daß die Aufnahme für das Befestigungselement aus einer Bohrung mit einem Gewindeeinsatz besteht.

12. Konsole nach einem der Ansprüche 1 bis 9,
dadurch gekennzeichnet,
daß die Aufnahme für das Befestigungselement aus einem einseitig geöffneten Schlitz (11) von im wesentlichen konstanter Breite besteht.

13. Konsole nach einem der Ansprüche 1 bis 12,
dadurch gekennzeichnet,
daß sie aus Temper-Guß besteht.

## Claims

1. Bracket for a mudguard support with the following features:
a) the bracket comprises a fastening plate (1);
b) a support member (4) projects from the fastening plate (1);
c) provided on the support member (4) is a socket (8; 10) for a retaining tube of the mudguard support;
d) the fastening plate (1) comprises a socket (2; 11) for a fastening member, which serves for the releasable fastening of the bracket to the vehicle chassis;
e) the axis (A) of the socket (8; 10) for the retaining tube of the mudguard support is offset with respect to the socket (2; 11) for the fastening member.

2. Bracket according to Claim 1, characterised in that the axis (A) of the socket (8; 10) for the retaining tube of the mudguard support or the fastening plate (1) is located substantially vertically.

3. Bracket according to Claim 1 or Claim 2, characterised in that the support member projects substantially perpendicularly from the fastening plate (1).

4. Bracket according to one of Claims 1 to 3, characterised in that the socket (8; 10) for the retaining tube is arranged in such a way that its projection in the plane of the fastening plate (1) lies outside the region covered by the fastening plate.

5. Bracket according to one of Claims 1 to 4, characterised in that the support member is constructed as a profiled support arm.

6. Bracket according to one of Claims 1 to 5, characterised in that the socket for the retaining tube comprises a bush (8).

7. Bracket according to one of Claims 1 to 5, characterised in that the socket for the retaining tube comprises a shell (10) partly surrounding the latter.

8. Bracket according to one of Claims 1 to 7, characterised in that the socket for the retaining tube is provided with a mechanical clamping device.

9. Bracket according to one of Claims 1 to 8, characterised in that on its periphery the fastening plate (1) comprises a substantially annular bearing surface (3).

10. Bracket according to one of Claims 1 to 9, characterised in that the socket for the fastening member consists of a through hole (2).

11. Bracket according to one of Claims 1 to 9, characterised in that the socket for the fastening member consists of a bore with a threaded insert.

12. Bracket according to one of Claims 1 to 9, characterised in that the socket for the fastening member consists of a slot (11) of substantially constant width, open on one side.

13. Bracket according to one of Claims 1 to 12, characterised in that it consists of malleable cast iron.

## Revendications

1. Console pour un support d'aile formant garde-boue, présentant les caractéristiques suivantes :
a) la console comprend une plaque de fixation (1);
b) un élément de support (4) fait saillie à partir de la plaque de fixation (1);
c) dans l'élément de support (4) est ménagé un logement (8;10) pour un tube de fixation du support d'aile;
d) la plaque de fixation (1) possède un évidement (2;11) pour un élément de fixation, qui assure la fixation amovible de la console sur le châssis du véhicule;
e) l'axe (A) du logement (8;10) pour le tube de fixation du support d'aile est décalé par rapport au logement (2;11) prévu pour l'élément de fixation.

2. Console selon la revendication 1, caractérisée en ce que l'axe (A) du logement (8;10) pour le tube de fixation du support d'aile ou de la plaque de fixation (1) est sensiblement vertical.

3. Console selon la revendication 1 ou 2, caractérisée en ce que l'élément de support fait saillie sensiblement perpendiculairement à partir de la plaque de fixation (1).

4. Console selon l'une des revendications 1 à 3, caractérisée en ce que le logement (8;10) pour le tube de fixation est disposé de telle sorte que sa projection dans le plan de la plaque de fixation (1) se situe à l'extérieur de la zone recouverte par la plaque de fixation.

5. Console selon l'une des revendications 1 à 4, caractérisée en ce que l'élément de support est réalisé sous la forme d'un bras de support profilé.

6. Console selon l'une des revendications 1 à 5, caractérisée en ce que le logement pour le tube de fixation comprend une douille (8).

7. Console selon l'une des revendications 1 à 5, caractérisée en ce que le logement pour le tube de fixation comprend une coque (10) qui entoure partiellement ce tube.

8. Console selon l'une des revendications 1 à 7, caractérisée en ce que le logement pour le tube de fixation est équipé d'un dispositif de serrage mécanique.

9. Console selon l'une des revendications 1 à 8, caractérisée en ce que la plaque de fixation (1) possède, sur sa périphérie, une surface d'appui sensiblement annulaire (3).

10. Console selon l'une des revendications 1 à 9, caractérisée en ce que le logement pour l'élément de fixation est constitué par un perçage traversant (2).

11. Console selon l'une des revendications 1 à 9, caractérisée en ce que le logement pour l'élément de fixation est constitué par un perçage possédant un insert fileté.

12. Console selon l'une des revendications 1 à 9, caractérisée en ce que le logement pour l'élément de fixation est constitué par une fente ouverte unilatéralement (11), qui possède une largeur sensiblement constante.

13. Console selon l'une des revendications 1 à 12, caractérisée en ce qu'elle est réalisée en fonte malléable.
